# EUROPEAN PATENT SPECIFICATION

(11) **EP 2 669 541 B1**
(45) Date of publication and mention of the grant of the patent: **24.06.2015**
(21) Application number: 12170313.6
(22) Date of filing: 31.05.2012
(51) Int. Cl.: F16C 33/66, F16C 19/36, F16C 19/38, F16C 33/58

(54) **Tapered roller bearing arrangement for a direct drive generator of a wind turbine**
Kegelrollenlageranordnung für einen Direktantriebsgenerator einer Windturbine
Agencement de palier à rouleaux coniques pour générateur à commande direct d'une éolienne

(43) Date of publication of application: 04.12.2013
(73) Proprietor: Siemens Aktiengesellschaft, 80333 München (DE)
(72) Inventor: Frydendal, Niels Karl, 7400 Herning (DK)

(56) References cited:
- EP-A1- 1 925 820
- EP-A1- 2 233 760
- DE-A1-102010 051 424
- JP-A- 2001 004 004
- JP-A- 2005 351 301
- JP-A- 2008 025 617
- US-A1- 2008 118 344

## Description

The present invention relates to a tapered roller bearing arrangement for a direct drive generator of a wind turbine and to a wind turbine comprising the tapered roller bearing arrangement.

Tapered roller bearings can take large axial forces and are able to sustain large radial forces. Therefore, these bearings are used in large machines, e.g. in wind turbines.
Due to the size of tapered roller bearings employed in such machines, it is a challenging task to ensure optimum lubrication of the bearings.

EP2233760A1 discloses a tapered roller bearing with lubricating grease inlets arranged at axial sides of the static outer ring of the bearing. The lubricating grease is guided by the tapered rollers to a grease outlet arranged in the rotating inner ring and from there to a grease collecting system. The grease collecting system is firmly connected to the inner ring and rotates with it.

A drawback of this known tapered roller bearing resides in the structure of the lubricating system that is split into two parts, a first part connected to the static outer ring for lubricating the tapered rollers, and a second part connected to the rotating inner ring for collecting surplus grease. Due to this bulky structure, it is difficult to arrive at a compact bearing arrangement.

Another drawback is that the grease collecting system rotates together with the rotating ring, wherein any surplus grease is collected in specially adapted containers. Due to this structure, the machine comprising the bearing has to be stopped regularly in order to allow discharging of the containers.

In large bearing assemblies with a rotating outer ring, it is a challenge to ensure a full grease exchange and to collect the surplus grease. Internally, an arrangement is known where lubricating grease is inlet from the center of the inner ring, guided through the cavity between the inner and the outer ring and collected from the outer ring. However, this requires an expensive grease collecting system. The grease flow is based on the grease pressure in the cavity part located between the rollers and the bearing seal. Therefore, grease pressure is built up in this cavity and grease pressure on the seals causes leakage, increased friction and wear on the seals.

DE102010051424A1 discloses an alternative tapered roller bearing arrangement, in accordance with the preamble of claim 1, having a lubricant outlet channel provided in a sealing ring fixed onto the inner ring of the tapered roller bearing.

It is therefore an object of the present invention to provide an improved tapered bearing arrangement for a direct drive generator which allows for efficient lubrication in a cost- and space-saving manner. Another object of the invention is to provide an improved direct drive generator comprising the bearing arrangement and an improved wind turbine.

The objects are solved by the features of the independent claim 1. Further advantageous developments are subject of the dependent claims.

The tapered roller bearing arrangement comprises a first inner ring with an inner raceway. The inner raceway has an inner end at a first radial distance from the rotation axis and an outer end at a second radial distance from the rotation axis, wherein the first radial distance is smaller than the second radial distance. The tapered roller bearing arrangement further comprises an outer ring with an outer raceway, wherein the outer ring is arranged around and moveable in relation to the first inner ring. A set of tapered rollers is disposed in a cavity which is arranged between the first inner ring and the outer ring, wherein the tapered rollers are arranged to roll in the cavity between the inner and the outer raceway.

Further, a grease inlet channel is arranged in the first inner ring. The grease inlet channel is connected to the cavity near the inner end of the inner raceway and used for conducting lubricating grease into the cavity.

A grease outlet channel is arranged in the first inner ring for draining surplus grease. The grease outlet channel extends through the inner ring from an inlet opening to an outlet opening. The inlet opening of the grease outlet channel is arranged at the axial side of the first inner ring facing the rollers, between the outer end of the inner raceway and the radial outer end of the first inner ring. The outlet opening of the grease outlet channel is arranged at the axial outer side of the first inner ring which is opposite to the roller-facing axial side. Thus, the grease outlet channel runs through the inner ring, from one axial face of the inner ring to the other.

Both, injection and drain of grease are exclusively effectuated through channels in one and the same ring, here the inner ring. Thus, compared to the arrangement known from EP2233760, the arrangement allows for draining out surplus grease in a very smart and space-saving manner. Since there is no need to stop the operation of the bearing, the operational costs are significantly reduced.

Moreover, the tapered roller bearing arrangement allows for both, enhanced lubrication and effective draining out of surplus grease. The grease may be injected near the smaller diameter end of the rollers and drained near the larger diameter end of the rollers. As a result, the grease is forced to pass along the raceway which ensures a full grease exchange.

Furthermore, since the inlet opening of the grease outlet channel is arranged near the larger diameter end of the rollers, pressure on the sealing, which is arranged between the inner and the outer ring, is avoided or at least reduced. Therefore, the lifetime of the sealing is extended; leakage and friction are reduced.

According to an embodiment of the invention, the inlet opening of the grease outlet channel is arranged at the outer end of the inner raceway, e.g. at the edge of the inner raceway. Therefore, any surplus grease may be conveyed away directly from the inner raceway instead of being pumped towards the sealing. The flow of the surplus grease through the outlet channel is not based on the global pressure in the bearing but on the pumping effect caused by the movement of the rollers. Therefore, there will be no or only very low pressure on the sealing.

According to another embodiment of the invention, the inner ring comprises a shoulder having a shoulder portion protruding into the cavity in such a way that the protruding portion abuts onto the larger diameter ends of the tapered rollers. According to this embodiment of the invention, the inlet opening of the grease outlet channel is arranged between this protruding portion and the radial outer end of the inner ring. Therefore, any surplus grease may be conveyed away from the cavity before being further pumped towards the sealing. In this embodiment of the invention, the pumping effect caused by the movement of the rollers is less important than in the embodiment, mentioned before. However, since the inlet opening of the grease outlet channel is arranged in proximity to the larger diameter end of the rollers, the movement of the rollers is also causing a pulsing in the grease that may be used for conveying surplus grease through the grease outlet channel. As a result, the pressure on the sealing is significantly lowered.

According to a further embodiment of the invention, the grease outlet channel extends in axial direction in relation to the rotation axis of the bearing arrangement and in parallel with said rotation axis. Thus, the length of the outlet channel through the inner ring is reduced to a minimum.

According to yet a further embodiment of the invention, the grease outlet channel is arranged in an inclined position such that the outlet opening is arranged at a shorter radial distance from the rotation axis than the inlet opening. The inclination of the grease outlet channel supports conveying away the surplus grease. The grease outlet channel may be inclined to the rotation axis by an angle in the range of 35° to 45°, e.g. 40°, in order to facilitate the flow of the surplus grease.

According to another embodiment of the invention, a circumferential groove is arranged at the side of the first inner ring facing the rollers. Thus, a certain amount of grease may escape from the cavity along this groove and the amount of grease in the bearing finds a balance. The groove may be connected to the inlet opening of the grease outlet channel in such a way that surplus grease may be collected in the groove and transported via the groove to the grease outlet channel.

According to a further embodiment of the invention, the grease outlet channel comprises two or more grease outlet channels which are arranged radially adjacent, that means at different diameters of the inner ring, and in close proximity to each other. Thereby, the effective flow resistance is reduced and thus a lower pressure is sufficient to convey away the surplus grease.

According to a further embodiment of the invention, at least two grease outlet channels (70) are arranged in parallel to one another at equally spaced intervals in circumferential direction.

According to an embodiment of the invention, a second inner ring is axially juxtaposed to the first inner first ring, wherein the second inner ring comprises an inner raceway having an inner end at a first radial distance from the rotation axis and an outer end at a second radial distance from the rotation axis. The first radial distance is smaller than the second radial distance. The outer ring is arranged around and moveable in relation to the second inner ring and comprises a further outer raceway.
A further set of tapered rollers having a smaller diameter end and a larger diameter end is moveable disposed between the inner raceway of the second inner ring and the further outer raceway. The grease inlet channel is arranged to also feed grease into the cavity near the inner end of the second inner raceway. Alternatively, a further grease inlet channel could be arranged in the second inner ring for feeding grease to the smaller diameter end of the tapered rollers.
A further grease outlet channel with an inlet opening and an outlet opening is arranged within the second inner ring. The inlet opening is arranged at the axial side of the second inner ring which faces the rollers, wherein the inlet opening is arranged between the outer end of the inner raceway and the radial outer end of the second inner ring. The outlet opening is arranged at an axial outer side of the second inner ring. This axial outer side is situated opposite to the axial side of the second inner ring facing the rollers.

By arranging two rows of tapered rollers between one or more inner rings and one or more outer rings, the bearing arrangement may sustain even larger axial and radial forces.

In a further embodiment of the invention, the first inner ring and the second inner ring are formed integrally, thus avoiding mechanical interconnections between the first and the second inner ring. Besides, the outer ring may be composed of two distinct rings which facilitate the mounting of the bearing arrangement.

In a further embodiment of the invention, the one or more inner rings, the outer ring, or the inner and the outer rings are composed of a plurality of segments in circumferential direction. The segmentation of the rings allows for replacing damaged bearing parts easily.

In yet a further embodiment of the invention, the tapered roller bearing arrangement is comprised in a direct drive generator, wherein a rotor of the direct drive generator is connected to the outer ring for rotation therewith and a stator of the generator is connected to the first inner ring. By using the tapered roller bearing arrangement in conjunction with a direct drive generator, surplus grease may be drained out in a smart and space-saving manner. As a result, there is no need to stop the operation of the generator for cleaning the grease collecting means. This is advantageous for reducing operating costs of wind turbines, especially offshore wind turbines.

A method example for lubricating such a tapered roller bearing arrangement comprises the steps of feeding grease via the grease inlet channel into the cavity, guiding the grease through the cavity to the inlet opening of the grease outlet channel, and draining surplus grease from the cavity through the grease outlet channel.

In the following, the invention will be described by way of example in more detail with reference to the drawings, wherein the drawings show preferred configurations and do not limit the scope of the invention.

FIG 1 shows schematically a sectional view of a part of the bearing arrangement according to an embodiment of the invention.

FIG 2 shows schematically a sectional view of a part of the bearing arrangement according to another embodiment of the invention.

FIG 2a shows schematically an enlarged sectional view of a detail of FIG 2

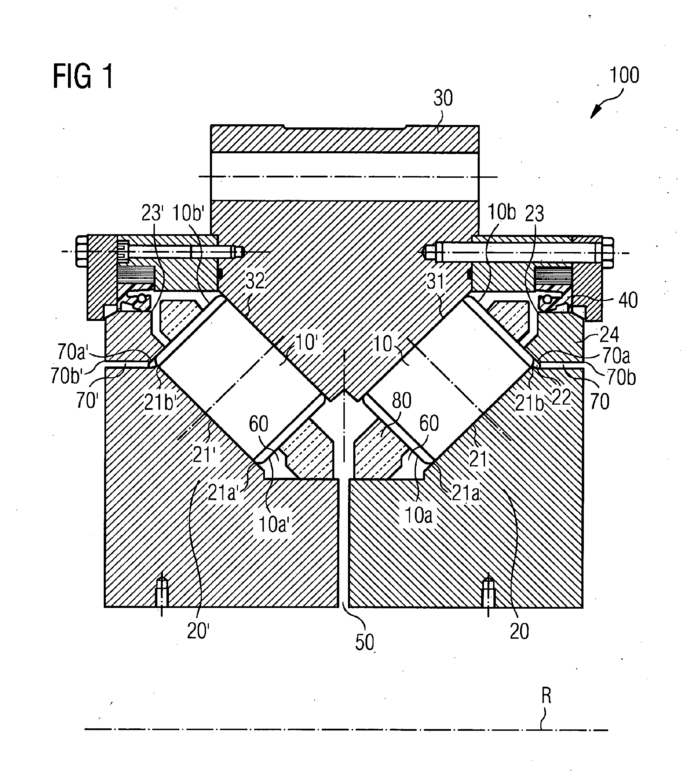

Referring to **FIG 1****,** the tapered roller bearing arrangement 100 comprises a first inner ring 20 and an outer ring 30, wherein the outer ring 30 is arranged around and moveable in relation to the first inner ring 20.

The bearing arrangement 100 comprises furthermore a first set of tapered rollers 10 disposed in a cavity 60 between the first inner ring 20 and the outer ring 30. The tapered rollers 10 are arranged to roll between a raceway 21 of the first inner ring 20 and a raceway 31 of the outer ring 30. In the following, the raceway 21 of the first inner ring 20 is referred to as inner raceway 21 and the raceway 31 of the outer ring 30 is referred to as outer raceway 31.

Preferably, but not necessarily, the tapered rollers 10 are held in positions circumferentially spaced at equal intervals by a cage 80. Besides, a sealing 40 is arranged between the first inner ring 20 and the outer ring 30.

The inner raceway 21 is tapered in relation to the rotation axis R of the bearing arrangement 100 and has an inner end 21a and an outer end 21b. Thereby, the inner end 21a is arranged at a smaller diameter of the inner ring 20 and the outer end 21b is arranged at a larger diameter of the inner ring 20. Thus, in relation to the rotation axis R of the bearing arrangement 100, the radial distance of the outer end 21b is larger than the radial distance of the inner end 21a.

A grease inlet channel 50 is arranged in the first inner ring 20, running in radial direction. It could also be arranged partly in axial direction or in any other direction as long as it is connected to the cavity 60 near the inner end 21a of the inner raceway 21. The grease inlet channel 50 is used for feeding lubricating grease into the cavity 60 near the smaller diameter end 10a of the tapered rollers 10. The movement of the rollers 10 conducts the grease along the raceways 21, 31 towards the larger diameter end 10b of the rollers. Any surplus grease is finally conducted towards the cavity part between the larger diameter end 10b of the rollers and the sealing 40. Thereby, the pressure in this cavity part would normally be increased.

In order to minimize the pressure on the sealing 40, the inlet opening 70a of a grease outlet channel 70 is arranged at the roller-facing axial side of the first inner ring 20 between the outer end 21b of the inner raceway and the radial outer end 23 of the first inner ring 20. By the movement of the rollers 10, surplus grease is pumped into the grease outlet channel 70 prior reaching the sealing 40. The grease outlet channel 70 is running through the first inner ring 20 and may be configured as a bore hole.

In the bearing arrangement 100 shown in FIG 1, the grease outlet channel 70 runs from one axial side of the inner ring 20 to the other and extends in axial direction in relation to the rotation axis R. The inlet opening 70a is arranged at the outer end 21b of the inner raceway 21, preferably at the edge of the inner raceway 21. The edge of the inner raceway 21 may also be referred to as the very outer end of the inner raceway 21. Although it is preferred to position the inlet opening of the grease outlet channel 70 at the edge of the inner raceway 21, it may also be arranged near the edge of the inner raceway 21.

The outlet opening 70b of the grease outlet channel 70b is arranged at the opposite axial side of the first inner ring 20, herein referred to as axial outer side. The axial outer side of the first inner ring 20 is located opposite to the roller-facing axial side of the inner ring 20.

In order to further facilitate the grease transport from the cavity 60 to the axial outer side of the first inner ring 20, the grease outlet channel 70 could also be inclined to the rotation axis R of the bearing arrangement 100). Besides, the grease outlet channel 70 could comprise several grease outlet channels arranged next to each other.

As shown in FIG 1, the bearing arrangement 100 may comprise a circumferential groove 22 arranged at the roller-facing side of the first inner ring 2. The groove 22 is connected to the inlet opening 70a of the grease outlet channel 70 and thus the groove is in fluid connection with the inner raceway 21. Surplus grease may be collected in the groove 22 and transported via the groove 22 to the grease outlet channel 70.

With the groove 22 in the corner between the larger diameter end of the inner raceway 21 and the shoulder 24 or the protruding portion of the shoulder 25, a certain amount of grease may escape into and flow along the groove 22. Thus, not all the grease will be pumped out. With a high amount of grease pushed, in flow direction of the grease, in front of the rollers 10, some grease will be pressed out through the grease outlet channel 70. As a result, the amount of grease in the bearing arrangement 100 will automatically find a balance.

Two or more grease outlet channels (70) may be distributed in parallel to one another at equally spaced intervals in circumferential direction. Preferably, four grease outlet channels (70) are comprised within the inner ring, wherein their outlet openings (70b) are circumferentially distributed and equidistantly spaced at the axial outer side of the inner ring 20.

Tapered roller bearings often comprise two rows of tapered rollers in the form of two single-row bearings arranged juxtaposed to each other or in the form of a two-row bearing, as shown in FIG 1.

Thus, the tapered bearing arrangement 100 may optionally comprise a second inner ring 20', wherein the first and second inner rings 20, 20' are formed integrally or as two distinct rings. The two distinct rings may be firmly connected to each other.

As shown in FIG 1, the second inner ring 20' is arranged axially juxtaposed to the first inner 20. An inner raceway 21' is formed on the second inner ring 20', wherein the inner raceway 21' is a tapered raceway. That means it has an inner end 21a' at a first radial distance from the rotation axis R of the bearing arrangement and an outer end 21b' at a second radial distance from the rotation axis R, wherein the first radial distance is smaller than the second radial distance.

The outer ring 30 is arranged around and moveable in relation to both the first inner ring 20 and the second inner ring 20', and comprises a further outer raceway 32 which is also a tapered raceway.

A further set of tapered rollers 10', having a smaller diameter end 10a' and a larger diameter end 10b', is disposed between the inner raceway 21' of the second inner ring 20' and the further outer raceway 32. The tapered rollers 10' are arranged to roll between the raceway 21' of the second inner ring 20' and the further outer raceway 32.

. The grease inlet channel 50 may be arranged to also feed grease into the cavity 60 near the inner end 21a' of the second inner raceway 21'. Alternatively, two separate inlet channels 50 could be arranged in the two inner rings 20, 20' to feed the two rows of tapered rollers 10, 10' with lubricating grease.

Moreover, a further grease outlet channel 70' is arranged within the second inner ring 20' for conveying used grease away from the outer edge of the further raceway 21'. The further grease outlet channel 70' is running from one axial side of the second inner ring 20' to its opposite axial side, referred to as axial outer side.

The further grease outlet channel 70' has an inlet opening 70a' and an outlet opening 70b'. The inlet opening 70a' is arranged at the axial side of the second inner ring 20' facing the rollers 10', at the outer end 21b' of the inner raceway 21'. The outlet opening 70b' of the further grease outlet channel 70' is arranged at the axial outer side of the second inner ring 20'. This axial outer side is located opposite to the axial side of the second inner ring 20' facing the rollers 10'.

As described above, the bearing arrangement 100, shown in FIG 1, comprises an outer ring 30 having two outer raceways 31, 32 as well as a first inner ring 20 and a second inner ring 20' that are firmly connected to each other, e.g. by screw connections. Alternatively, the first and second inner ring 20, 20' may be formed integrally and/or the outer ring 30 may comprise two distinct outer rings that are firmly connected to each other. Besides, each of the rings (20, 20',30) may be segmented in circumferential direction.

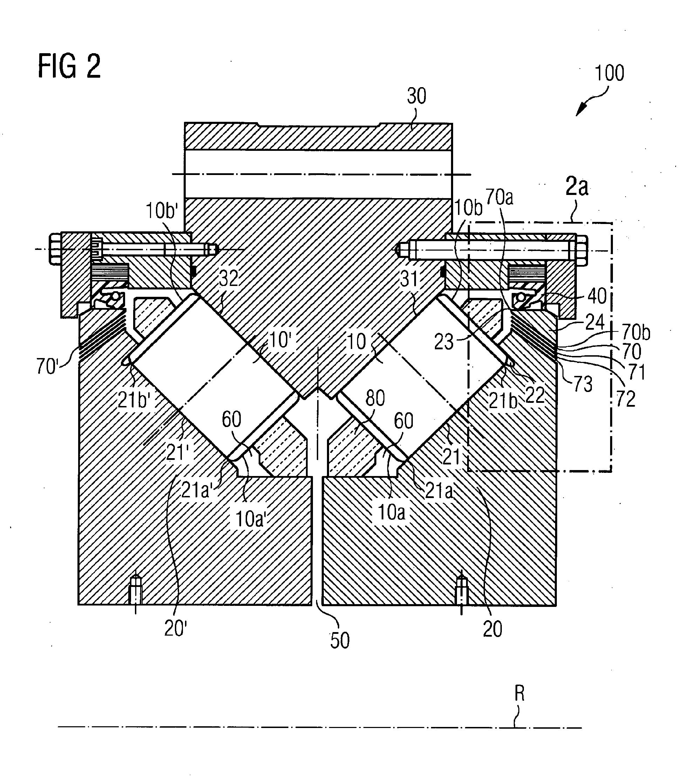

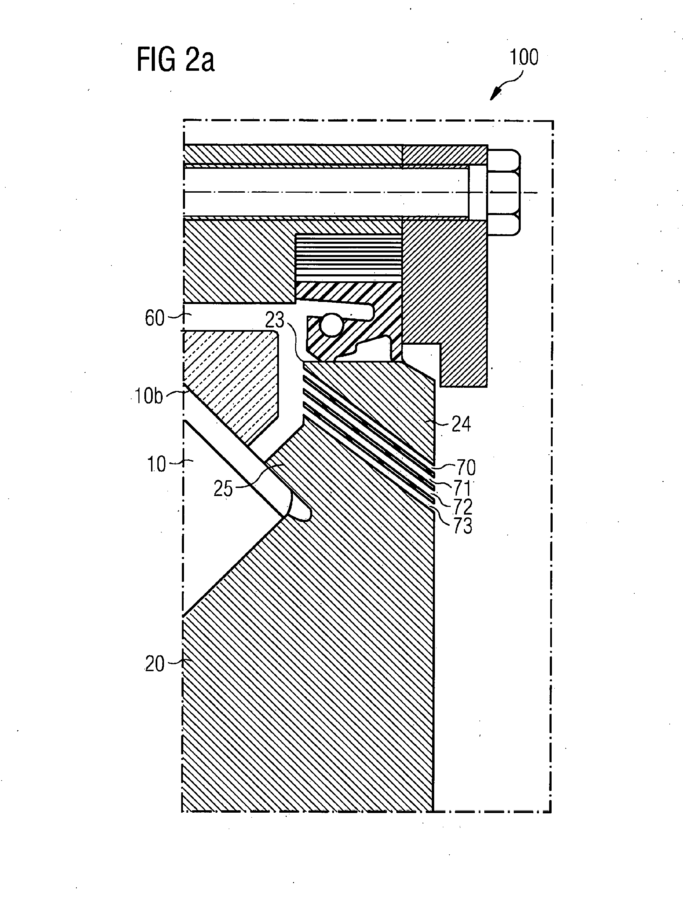

**FIG 2** shows another embodiment of the invention. The embodiment shown in FIG 2 differs from the embodiment shown in FIG 1 in that the inlet opening 70a of the grease outlet channel 70 is spaced apart from the outer end 21b of the inner raceway 21 but still between the outer end 21b of the inner raceway and the radial outer end 23 of the first inner ring 20. This difference is best seen from **FIG 2a** showing just the related section of the bearing arrangement 100.

The first inner ring 20 comprises a shoulder 24. The shoulder has, preferably, a shoulder portion 25 protruding into the cavity 60 in such a way that the protruding portion 25 abuts onto the larger diameter ends 10b of the tapered rollers 10. The inlet opening 70a of the grease outlet channel 70 is arranged between the outer end of the inner raceway 21b and the radial outer end 23 of the first inner ring 20. Preferably, it is arranged between the protruding portion of the shoulder 25 and the radial outer end 23 of the first inner ring 20.

The grease outlet channel 70 is inclined in relation to the rotation axis R such that the outlet opening 70b is arranged at a shorter radial distance from the rotation axis than the inlet opening 70a. That means that the grease outlet channel 70 is inclined towards the rotation axis.

The inclination angle of the grease outlet channel 70 is, preferably, in the range of 35° to 45°, e.g. about 40°.

Although, an inclined grease outlet channel 70 is preferred in this embodiment, the grease outlet channel 70 could also run in axial direction, in parallel with the rotation axis R.

As shown in FIG 2 and FIG 2a, the grease outlet channel 70 may comprise at least two grease outlet channels 70, 71, 72, 73 which are arranged next to each other. The grease outlet channels 70, 71, 72, 73 may be arranged radially adjacent to one another. Alternatively, a single grease outlet channel 70 could run through the first inner ring having a diameter which is large enough to substitute for the at least two grease outlet channels 70, 71, 72, 73. The at least two grease outlet channels 70, 71, 72, 73 may all be inclined in relation to the rotation axis, preferably, by the same inclination angle such that they run in parallel with one another.

According to a further embodiment of the invention (not shown), the outer ring 30 is firmly connected to a rotor of a direct drive generator for rotation therewith, and the one or more inner rings 20, 20' are firmly connected to a stator of the direct drive generator.

A method for lubricating the tapered roller bearing arrangement 100, comprises the steps of feeding grease via the grease inlet channel 50 into the cavity 60 and guiding the grease through the cavity 60 to the inlet opening 70a, 70a' of the grease outlet channel 70, 70'. Thereby, the grease is pumped by the movement of the rollers 10, 10', and if present, the movement of a cage towards the inlet opening of the grease outlet channel 70a, 70a' and from there to the outlet opening 70b, 70b' of the grease outlet channel 70, 70'. At the grease outlet opening 70b, 70b', the grease may be collected by grease cups, tubes, hoses or similar grease collecting means which may in turn be connected to one or more containers.

## Claims

1. Tapered roller bearing arrangement (100) for a direct drive generator of a wind turbine, comprising
- a first inner ring (20) with an inner raceway (21), the inner raceway (21) having an inner end (21a) at a first radial distance from the rotation axis (R) of the bearing arrangement and an outer end (21b) at a second radial distance from the rotation axis (R), the first radial distance being smaller than the second radial distance;
- an outer ring (30) with an outer raceway (31), wherein the outer ring (30) is arranged around and moveable in relation to the first inner ring (20);
- a set of tapered rollers (10) disposed in a cavity (60) arranged between the first inner ring (20) and the outer ring (30), wherein the tapered rollers (10) are arranged to roll in the cavity between the inner (21) and the outer raceway (31);
- a grease inlet channel (50) arranged within the first inner ring and connected to the cavity (60) near the inner end (21a) of the inner raceway (21) for conducting lubricating grease into the cavity (60); and
**characterised in that**:
- a grease outlet channel (70) is arranged within the first inner ring (20) for draining surplus grease, the grease outlet channel (70) having an inlet opening (70a) and an outlet opening (70b),
- the inlet opening (70a) is arranged at a roller-facing axial side of the first inner ring (20) between the outer end (21b) of the inner raceway (21) and the radial outer end (23) of the first inner ring (20), and
- the outlet opening (70b) is arranged at an axial outer side of the first inner ring (20), opposite to the roller-facing axial side

2. Tapered roller bearing arrangement (100) according to claim 1,
wherein the inlet opening (70a) of the grease outlet channel (70) is arranged at the outer end (21b) of the inner raceway (21).

3. Tapered roller bearing arrangement (100) according to claim 1,
- wherein the tapered rollers (10) have a smaller diameter end (10a) and a larger diameter end (10b),
- wherein the inner ring (20) comprises a shoulder (24) having a shoulder portion (25) protruding into the cavity (60) in such a way that the protruding portion (25) abuts onto the larger diameter ends (10b) of the tapered rollers (10), and
- wherein the inlet opening (70a) of the grease outlet channel (70) is arranged between the protruding portion (25) and the radial outer end (23) of the inner ring (20).

4. Tapered roller bearing arrangement (100) according to one of the preceding claims,
- wherein the grease outlet channel (70) extends in axial direction in relation to the rotation axis of the bearing arrangement (100) and in parallel with said rotation axis (R).

5. Tapered roller bearing arrangement (100) according to one of claims 1-3,
- wherein the grease outlet channel (70) is inclined in relation to the rotation axis (R) such that the outlet opening (70b) is arranged at a shorter radial distance from the rotation axis (R) than the inlet opening (70a).

6. Tapered roller bearing arrangement (100) according to the claim 5,
- wherein the grease outlet channel (70) is inclined to the rotation axis (R) by an angle in the range of 35° to 45°.

7. Tapered roller bearing arrangement (100) according to one of the preceding claims,
- wherein a circumferential groove (22) is arranged at the roller-facing side of the first inner ring (20) for collecting surplus grease, and
- wherein the circumferential groove (22) is connected to the inlet opening (70a) of the grease outlet channel (70) in such a way that surplus grease may be collected in the groove (22) and transported via the groove (22) to the grease outlet channel (70).

8. Tapered roller bearing arrangement (100) according to one of the preceding claims,
- wherein the grease outlet channel (70) comprises at least two grease outlet channels (70, 71, 72, 73) which are arranged next to each other at different diameters of the inner ring (20).

9. Tapered roller bearing arrangement (100) according to one of the preceding claims,
- wherein at least two grease outlet channels (70) are arranged in parallel to one another at equally spaced intervals in circumferential direction.

10. Tapered roller bearing arrangement according to one of the preceding claims, further comprising
- a second inner ring (20') axially juxtaposed to the first inner first ring (20), wherein the second inner ring (20') comprises an inner raceway (21') having an inner end (21a') at a first radial distance from the rotation axis (R) of the bearing arrangement and an outer end (21b') at a second radial distance, from the rotation axis (R), the first radial distance being smaller than the second radial distance;
- wherein the outer ring (30) is arranged around and moveable in relation to the second inner ring (20') and comprises a further outer raceway (32);
- a further set of tapered rollers (10') having a smaller diametex end (10a') and a larger diameter end (10b'), the further set of tapered rollers (10') is disposed between the inner raceway (21') of the second inner ring (20') and the further outer raceway (32), wherein the rollers (10') are arranged to roll between said raceway (21') of the second inner ring (20) and said further outer raceway (32);
- wherein the grease inlet channel (50) is arranged to also feed grease into the cavity (60) near the inner end (21a') of the second inner raceway (21'); and
- a further grease outlet channel (70') arranged within the second inner ring (20'), wherein the further grease outlet channel (70') has an inlet opening (70a') and an outlet opening (70b'),
the inlet opening (70a') is arranged at the roller-facing axial side of the second inner ring (20') between the outer end (21b') of the inner raceway (21') and the radial outer end (23') of the second inner ring (20'), and
- wherein the outlet opening (70b') of the further grease outlet channel (70') is arranged at an axial outer side of the second inner ring (20'), opposite to the roller-facing axial side of the second inner ring (20').

11. Tapered roller bearing arrangement (100) according to the claim 10,
- wherein either the first inner ring (20') and the second inner ring (20') are formed integrally or the outer ring (30) is composed of two distinct rings or both, the first inner ring (20') and the second inner ring (20') are formed integrally and the outer ring (30) is composed of two distinct rings.

12. Tapered roller bearing arrangement (100) according to one of the preceding claims,
- wherein the first inner ring (20), the second inner ring (20') and/or the outer ring (30) are composed of a plurality of segments in circumferential direction.

13. Direct drive generator for a wind turbine comprising a tapered roller bearing arrangement (100) according to one of the preceding claims,
- wherein a rotor of the direct drive generator is firmly connected to the outer ring (30) for rotation therewith, and wherein a stator of the generator is firmly connected to the first inner ring (20).

14. Wind turbine comprising the tapered bearing arrangement (100) according to one of claims 1 to 12 or the direct drive generator according to claim 13.

## Patentansprüche

1. Kegelrollenlageranordnung (100) für einen direkt angetriebenen Generator einer Windenergieanlage, die Folgendes umfasst:
- einen ersten Innenring (20) mit einem Innenlaufring (21), wobei der Innenlaufring (21) in einem ersten radialen Abstand zur Rotationsachse (R) der Lageranordnung ein inneres Ende (21a) und in einem zweiten radialen Abstand zur Rotationsachse (R) ein äußeres Ende (21b) aufweist, wobei der erste radiale Abstand geringer ist als der zweite,
- einen Außenring (30) mit einem Außenlaufring (31), wobei der Außenring (30) um den ersten Innenring (20) herum angeordnet ist und sich in Bezug dazu bewegen lässt,
- einen Satz Kegelrollen (10), die sich in einem Hohlraum (60) befinden, der zwischen dem ersten Innenring (20) und dem Außenring (30) angeordnet ist, wobei die Kegelrollen (10) so angeordnet sind, dass sie in dem Hohlraum zwischen dem Innen- (21) und dem Außenlaufring (31) laufen,
- einen Fetteinlasskanal (50), der innerhalb des ersten Innenrings angeordnet und zum Leiten von Schmierfett in den Hohlraum (60) in der Nähe des inneren Endes (21a) des Innenlaufrings (21) mit dem Hohlraum (60) verbunden ist, und
**dadurch gekennzeichnet, dass**:
- in dem ersten Innenring (20) ein Fettauslasskanal (70) zum Ableiten von überschüssigem Fett angeordnet ist, wobei der Fettauslasskanal (70) eine Einlassöffnung (70a) und eine Auslassöffnung (70b) aufweist,
- die Einlassöffnung (70a) zwischen dem äußeren Ende (21b) des Innenlaufrings (21) und dem radial äußeren Ende (23) des ersten Innenrings (20) auf einer den Rollen zugewandten axialen Seite des ersten Innenrings (20) angeordnet ist und
- die Auslassöffnung (70b) an einer äußeren axialen Seite des ersten Innenrings (20) gegenüber der den Rollen zugewandten axialen Seite angeordnet ist.

2. Kegelrollenlageranordnung (100) nach Anspruch 1,
bei der die Einlassöffnung (70a) des Fettauslasskanals (70) am äußeren Ende (21b) des Innenlaufrings (21) angeordnet ist.

3. Kegelrollenlageranordnung (100) nach Anspruch 1,
- bei der die Kegelrollen (10) ein Ende (10a) mit einem kleineren Durchmesser und ein Ende (10b) mit einem größeren Durchmesser aufweisen,
- bei der der Innenring (20) eine Schulter (24) mit einem Schulterabschnitt (25) aufweist, der so in den Hohlraum (60) vorsteht, dass der vorstehende Abschnitt (25) an den Enden (10b) der Kegelrollen (10) mit dem größeren Durchmesser anliegt, und
- bei der die Einlassöffnung (70a) des Fettauslasskanals (70) zwischen dem vorstehenden Abschnitt (25) und dem radial äußeren Ende (23) des Innenrings (20) angeordnet ist.

4. Kegelrollenlageranordnung (100) nach einem der vorhergehenden Ansprüche,
- bei der der Fettauslasskanal (70) in Bezug auf die Rotationsachse der Lageranordnung (100) in axialer Richtung und parallel zur Rotationsachse (R) verläuft.

5. Kegelrollenlageranordnung (100) nach einem der Ansprüche 1 bis 3,
- bei der der Fettauslasskanal (70) in Bezug auf die Rotationsachse (R) so geneigt ist, dass die Auslassöffnung (70b) in einem geringeren radialen Abstand zur Rotationsachse (R) angeordnet ist als die Einlassöffnung (70a).

6. Kegelrollenlageranordnung (100) nach Anspruch 5,
- bei der der Fettauslasskanal (70) in einem Winkel im Bereich von 35° bis 45° zur Rotationsachse (R) geneigt ist.

7. Kegelrollenlageranordnung (100) nach einem der vorhergehenden Ansprüche,
- bei der auf der den Rollen zugewandten Seite des ersten Innenrings (20) eine Umfangsnut (22) zum Sammeln von überschüssigem Fett angeordnet ist und
- bei der die Umfangsnut (22) so mit der Einlassöffnung (70a) des Fettauslasskanals (70) verbunden ist, dass überschüssiges Fett in der Nut (22) gesammelt und über die Nut (22) zum Fettauslasskanal (70) transportiert werden kann.

8. Kegelrollenlageranordnung (100) nach einem der vorhergehenden Ansprüche,
- bei der der Fettauslasskanal (70) mindestens zwei Fettauslasskanäle (70, 71, 72, 73) umfasst, die bei verschiedenen Durchmessern des Innenrings (20) nebeneinander angeordnet sind.

9. Kegelrollenlageranordnung (100) nach einem der vorhergehenden Ansprüche,
- bei der mindestens zwei Fettauslasskanäle (70) in Umfangsrichtung in gleichmäßigen Abständen parallel zueinander angeordnet sind.

10. Kegelrollenanordnung nach einem der vorhergehenden Ansprüche, die ferner Folgendes umfasst:
- einen dem ersten Innenring (20) axial gegenüberliegenden zweiten Innenring (20'), wobei der zweite Innenring (20') in einem ersten radialen Abstand zur Rotationsachse (R) der Lageranordnung einen Innenlaufring (21') mit einem inneren Ende (21a') und in einem zweiten radialen Abstand zur Rotationsachse (R) ein äußeres Ende (21b') aufweist, wobei der erste radiale Abstand geringer ist als der zweite,
- wobei der Außenring (30) um den zweiten Innenring (20') herum angeordnet ist und sich in Bezug dazu bewegen lässt und einen weiteren Außenlaufring (32) umfasst,
- einen weiteren Satz Kegelrollen (10') mit einem Ende (10a') mit einem kleineren Durchmesser und einem Ende (10b') mit einem größeren Durchmesser, wobei sich der weitere Satz Kegelrollen (10') zwischen dem Innenlaufring (21') des zweiten Innenrings (20') und dem weiteren Außenlaufring (32) befindet, wobei die Rollen (10') so angeordnet sind, dass sie zwischen dem Laufring (21') des zweiten Innenrings (20) und dem weiteren Außenlaufring (32) laufen,
- wobei der Fetteinlasskanal (50) so angeordnet ist, dass er auch in der Nähe des inneren Endes (21a') des zweiten Innenlaufrings (21') Fett in den Hohlraum (60) leitet, und
- einen weiteren Fettauslasskanal (70'), der in dem zweiten Innenring (20') angeordnet ist, wobei der weitere Fettauslasskanal (70') eine Einlassöffnung (70a') und eine Auslassöffnung (70b') aufweist,
- wobei die Einlassöffnung (70a') zwischen dem äußeren Ende (21b') des Innenlaufrings (21') und dem radial äußeren Ende (23') des zweiten Innenrings (20') auf der den Rollen zugewandten axialen Seite des zweiten Innenrings (20') angeordnet ist und
- wobei die Auslassöffnung (70b') des weiteren Fettauslasskanals (70') auf einer äußeren axialen Seite des zweiten Innenrings (20') gegenüber der den Rollen zugewandten axialen Seite des zweiten Innenrings (20') angeordnet ist.

11. Kegelrollenlageranordnung (100) nach Anspruch 10,
- bei der entweder der erste Innenring (20') und der zweite Innenring (20') einstückig ausgebildet sind oder der Außenring (30) aus zwei einzelnen Ringen besteht oder beide, der erste Innenring (20') und der zweite Innenring (20'), einstückig ausgebildet sind und der Außenring (30) aus zwei einzelnen Ringen besteht.

12. Kegelrollenlageranordnung (100) nach einem der vorhergehenden Ansprüche,
- bei der der erste Innenring (20), der zweite Innenring (20') und/ oder der Außenring (30) in Umfangsrichtung aus mehreren Segmenten zusammengesetzt sind.

13. Direkt angetriebener Generator für eine Windenergieanlage mit einer Kegelrollenlageranordnung (100) nach einem der vorhergehenden Ansprüche,
- wobei ein Rotor des direkt angetriebenen Generators fest mit dem Außenring (30) verbunden ist und sich mit diesem dreht und ein Stator des Generators fest mit dem ersten Innenring (20) verbunden ist.

14. Windenergieanlage mit der Kegelrollenlageranordnung (100) nach einem der Ansprüche 1 bis 12 oder dem direkt angetriebenen Generator nach Anspruch 13.

## Revendications

1. Agencement de palier à rouleaux coniques (100) pour un générateur à entraînement direct d'une éolienne, comprenant
- une première bague interne (20) avec un chemin de roulement interne (21), le chemin de roulement interne (21) ayant une extrémité interne (21a) à une première distance radiale de l'axe de rotation (R) de l'agencement de palier et une extrémité externe (21b) à une deuxième distance radiale de l'axe de rotation (R), la première distance radiale étant plus petite que la deuxième distance radiale ;
- une bague externe (30) avec un chemin de roulement externe (31), la bague externe (30) étant agencée autour de et mobile par rapport à la première bague interne (20) ;
- un ensemble de rouleaux coniques (10) disposés dans une cavité (60) agencée entre la première bague interne (20) et la bague externe (30), les rouleaux coniques (10) étant agencés pour rouler dans la cavité entre le chemin de roulement interne (21) et le chemin de roulement externe (31) ;
- un canal d'admission de graisse (50) agencé à l'intérieur de la première bague interne et relié à la cavité (60) près de l'extrémité interne (21a) du chemin de roulement interne (21) pour conduire de la graisse lubrifiante dans la cavité (60) ; et
**caractérisé en ce que** :
- un canal d'évacuation de graisse (70) est agencé à l'intérieur de la première bague interne (20) pour vider la graisse en excédent, le canal d'évacuation de graisse (70) ayant une ouverture d'admission (70a) et une ouverture d'évacuation (70b),
- l'ouverture d'admission (70a) est agencée au niveau d'un côté axial, faisant face aux rouleaux, de la première bague interne (20) entre l'extrémité externe (21b) du chemin de roulement interne (21) et l'extrémité externe radiale (23) de la première bague interne (20), et
- l'ouverture d'évacuation (70b) est agencée au niveau d'un côté externe axial de la première bague interne (20), à l'opposé du côté axial faisant face aux rouleaux.

2. Agencement de palier à rouleaux coniques (100) selon la revendication 1,
dans lequel l'ouverture d'admission (70a) du canal d'évacuation de graisse (70) est agencée au niveau de l'extrémité externe (21b) du chemin de roulement interne (21).

3. Agencement de palier à rouleaux coniques (100) selon la revendication 1,
- dans lequel les rouleaux coniques (10) ont une extrémité à diamètre plus petit (10a) et une extrémité à diamètre plus grand (10b),
- dans lequel la bague interne (20) comprend un épaulement (24) ayant une partie d'épaulement (25) faisant saillie dans la cavité (60) de telle manière que la partie faisant saillie (25) bute sur les extrémités à diamètre plus grand (10b) des rouleaux coniques (10), et
- dans lequel l'ouverture d'admission (70a) du canal d'évacuation de graisse (70) est agencée entre la partie faisant saillie (25) et l'extrémité externe radiale (23) de la bague interne (20).

4. Agencement de palier à rouleaux coniques (100) selon l'une des revendications précédentes,
- dans lequel le canal d'évacuation de graisse (70) s'étend dans la direction axiale par rapport à l'axe de rotation de l'agencement de palier (100) et de manière parallèle audit axe de rotation (R).

5. Agencement de palier à rouleaux coniques (100) selon l'une des revendications 1-3,
- dans lequel le canal d'évacuation de graisse (70) est incliné par rapport à l'axe de rotation (R) de telle sorte que l'ouverture d'évacuation (70b) est agencée à une distance radiale de l'axe de rotation (R) plus courte que l'ouverture d'admission (70a).

6. Agencement de palier à rouleaux coniques (100) selon la revendication 5,
- dans lequel le canal d'évacuation de graisse (70) est incliné vers l'axe de rotation (R) selon un angle dans la plage de 35° à 45°.

7. Agencement de palier à rouleaux coniques (100) selon l'une des revendications précédentes,
- dans lequel une rainure circonférentielle (22) est agencée au niveau du côté faisant face aux rouleaux de la première bague interne (20) pour recueillir la graisse en excédent, et
- dans lequel la rainure circonférentielle (22) est reliée à l'ouverture d'admission (70a) du canal d'évacuation de graisse (70) de telle sorte que la graisse en excédent peut être recueillie dans la rainure (22) et transportée via la rainure (22) vers le canal d'évacuation de graisse (70).

8. Agencement de palier à rouleaux coniques (100) selon l'une des revendications précédentes,
- dans lequel le canal d'évacuation de graisse (70) comprend au moins deux canaux d'évacuation de graisse (70, 71, 72, 73) qui sont agencés près les uns des autres à différents diamètres de la bague interne (20).

9. Agencement de palier à rouleaux coniques (100) selon l'une des revendications précédentes,
- dans lequel au moins deux canaux d'évacuation de graisse (70) sont agencés parallèlement l'un à l'autre à des intervalles équidistants dans la direction circonférentielle.

10. Agencement de palier à rouleaux coniques selon l'une des revendications précédentes, comprenant en outre
- une deuxième bague interne (20') juxtaposée axialement à la première bague interne (20), la deuxième bague interne (20') comprenant un chemin de roulement interne (21') ayant une extrémité interne (21a') à une première distance radiale de l'axe de rotation (R) de l'agencement de palier et une extrémité externe (21b') à une deuxième distance radiale de l'axe de rotation (R), la première distance radiale étant plus petite que la deuxième distance radiale ;
- dans lequel la bague externe (30) est agencée autour de et mobile par rapport à la deuxième bague interne (20') et comprend un chemin de roulement externe supplémentaire (32) ;
- un ensemble supplémentaire de rouleaux coniques (10') ayant une extrémité à diamètre plus petit (10a') et une extrémité à diamètre plus grand (10b'), l'ensemble supplémentaire de rouleaux coniques (10') étant disposé entre le chemin de roulement interne (21') de la deuxième bague interne (20') et le chemin de roulement externe supplémentaire (32), les rouleaux (10') étant agencés pour rouler entre ledit chemin de roulement (21') de la deuxième bague interne (20) et ledit chemin de roulement externe supplémentaire (32) ;
- dans lequel le canal d'admission de graisse (50) est agencé pour également amener de la graisse dans la cavité (60) près de l'extrémité interne (21a') du deuxième chemin de roulement interne (21' ) ; et
- un canal d'évacuation de graisse supplémentaire (70' ) agencé à l'intérieur de la deuxième bague interne (20'), le canal d'évacuation de graisse supplémentaire (70') ayant une ouverture d'admission (70a') et une ouverture d'évacuation (70b'),
l'ouverture d'admission (70a') est agencée au niveau du côté, faisant face aux rouleaux, de la deuxième bague interne (20') entre l'extrémité externe (21b') du chemin de roulement interne (21') et l'extrémité externe radiale (23') de la deuxième bague interne (20'), et
- dans lequel l'ouverture d'admission (70b') du canal d'évacuation de graisse supplémentaire (70') est agencée au niveau d'un côté externe axial de la deuxième bague interne (20'), à l'opposé du côté axial, faisant face aux rouleaux, de la deuxième bague interne (20').

11. Agencement de palier à rouleaux coniques (100) selon la revendication 10,
- dans lequel soit la première bague interne (20') et la deuxième bague interne (20') sont formées d'un seul tenant soit la bague externe (30) est composée de deux bagues distinctes ou les deux, la première bague interne (20') et la deuxième bague interne (20') sont formées d'un seul tenant et la bague externe (30) est composée de deux bagues distinctes.

12. Agencement de palier à rouleaux coniques (100) selon l'une des revendications précédentes,
- dans lequel la première bague interne (20), la deuxième bague interne (20') et/ou la bague externe (30) sont composées d'une pluralité de segments dans la direction circonférentielle.

13. Générateur à entraînement direct pour une éolienne comprenant un agencement de palier à rouleaux coniques (100) selon l'une des revendications précédentes,
- dans lequel un rotor du générateur à entraînement direct est fermement relié à la bague externe (30) pour entrer en rotation avec celle-ci, et dans lequel un stator du générateur est fermement relié à la première bague interne (20).

14. Eolienne comprenant l'agencement de palier à rouleaux coniques (100) selon l'une des revendications 1 à 12 ou le générateur à entraînement direct selon la revendication 13.
